# EUROPEAN PATENT SPECIFICATION

(11) **EP 1 868 405 B1**
(45) Date of publication and mention of the grant of the patent: **03.12.2014**
(21) Application number: 06731162.1
(22) Date of filing: 05.04.2006
(51) Int. Cl.: H04L 1/16, H04L 1/20

(54) **METHOD FOR OPTIMIZING RECEPTION NOTIFICATION INFORMATION EXCHANGES IN SYNCHRONOUS COMMUNICATION BETWEEN TERMINAL AND NETWORK, AND MOBILE TERMINAL**
VERFAHREN ZUR OPTIMIERUNG DES EMPFANGSBENACHRICHTIGUNGSINFORMATIONSAUSTAUSCHES BEI DER SYNCHRONEN KOMMUNIKATION ZWISCHEN EINEM ENDGERÄT UND NETZWERK SOWIE MOBILES ENDGERÄT
PROCEDE POUR OPTIMISER LES ECHANGES D INFORMATION DE NOTIFICATION DE RECEPTION EN COMMUNICATION SYNCHRONE ENTRE LE TERMINAL ET LE RESEAU, ET LE TERMINAL MOBILE

(30) Priority: 08.04.2005 FR 0550910
(43) Date of publication of application: 19.12.2007
(73) Proprietor: NEC Corporation, Minato-ku Tokyo 108-8001 (JP)
(72) Inventor: ROBERTS, Michael, F-92200 (FR); SAVAGLIO, Frank c/o NEC Patent Service Ltd., Minatu-ku, Tokyo 108-0023 (JP)
(74) Representative: Betten & Resch
(86) International application number: PCT/JP2006/307214
(87) International publication number: WO 2006/109646

(56) References cited:
- WO-A1-01/78324
- JP-A- 2000 184 437
- JP-A- 2002 009 741
- US-A1- 2004 192 308
- US-A1- 2004 223 507

## Description

### TECHNICAL FIELD

The present invention pertains to a method for optimizing the receipt notification information interchange in the synchronous communication between a terminal and a network in the field of telecommunication and a mobile terminal, and particularly to a method for optimizing the interchange of data receipt notification signal between a mobile terminal and a plurality of base stations in a cellular communication network during radio synchronous connection.

Also, the invention pertains to a mobile terminal for communicating with a plurality of base stations in a cellular communication network.

### BACKGROUND ART

To allow high speed communications via a cellular network for the mobile terminal, a 3 GPP (Third generation partnership project) group specification employs a similar configuration to an HSDPA (High Speed Downlink Packet Access) service that provides a transmission rate of up to 2 Mbits/sec via an uplink dedicated channel EUDCH (Enhanced Uplink Dedicated Channel) or an HSUPA (High Speed Uplink Packet Access) service for future multimedia applications in a UMTS (next mobile telephone system). To automatically manage the report of receipt notification between the terminal and the base station, the 3 GPP group specification further specifies that an HARQ (Hybrid Automatic Request) layer of additional protocol is added at the level of a MAC (Medium Access Control) sublayer of layer 2 in the protocol for radio interface.

A new HARQ protocol layer is configured to transmit an ACK positive acknowledge receive signal to the base station in the network when the base station properly receives the packet transmitted from the terminal, or a NACK negative acknowledge signal when the base station does not properly receive the packet. In case of a transmission error, the terminal has to retransmit the packet in close liaison with the network.

The 3 GPP group specification specifies that all the cells involving the communication with the terminal should explicitly transmit an ACK positive acknowledge receipt notification in the appropriate transmission. As a result, in making the synchronous connection, if the terminal could always estimate the connection state to know whether transmit data is properly received, the channel would be occupied uselessly.

Moreover, it is advantageous that the base station does not need to retransmit the ACK signal, as far as the number of ACK is 90%, and the number of NACK is about 10% to 20%.

US Patent Application 20040223507 discloses a method for ACK/NACK determination reliability for a communication device including a first step of defining a supplementary indicator of message acceptability. A next step includes sending data from a communication device to a BTS on an uplink channel. A next step includes checking the data to see if it was properly received. A next step includes providing the supplementary indicator of message acceptability to the communication device in addition to ACK/NACK information. A next step includes utilizing the supplementary indicator of message acceptability to determine a reliability of the ACK/NACK information.

US Patent Application 20040192308 discloses a method and system of retransmitting uplink packet data from a user equipment (UE) in a handover region to Node Bs. The UE transmits packet data to the Node Bs on an enhanced uplink dedicated transport channel (EUDCH). The Node Bs transmit to the UE first response fields indicating whether the Node Bs have received good packet data or bad packet data, and second response fields that the Node Bs received from an RNC indicating whether a radio network controller (RNC) has received good packet data or bad packet data. The UE then detects the first and second response fields and retransmits the uplink packet data according to the values of the response fields in the UE.

### DISCLOSURE OF THE INVENTION

An object of the invention is to provide a method for optimizing receipt notification information interchange in the synchronous communication between a terminal and a network, and a mobile terminal in which the number of useless ACK signals can be reduced.

The above object is accomplished by a method for optimizing the interchange of a receipt notification signal between a plurality of base stations and a mobile terminal synchronously connected in a cellular communication network, according to claim 1.

With the method of claim 1, it is possible to avoid a situation where the base station transmits an ACK signal unnecessarily and save the electric power. As a result, the conflict on the system level is reduced.

According to an embodiment, the terminal retransmits data if the estimated quality of all the links is below a predetermined value.

According to an embodiment, the terminal retransmits data if the estimated quality of at least one link is below the predetermined value and all other base stations transmit a negative acknowledge NACK receipt notification to the terminal.

The invention is carried out by a mobile terminal for communicating with a plurality of base stations in a cellular communication network.

The terminal according to the invention is defined in claim 7.

If the quality of link is good, the terminal considers that the data packet has been received correctly.

Preferably, the invention is carried out in the network based on a WCDMA technique.

With the method for optimizing receipt notification information interchange in the synchronous communication between the terminal and the network, and with the mobile terminal according to the invention, it is possible to optimize the interchange of an ACK signal and a NACK signal between the terminal and the network and reduce the conflict on the terminal level.

### BRIEF DESCRIPTION OF THE DRAWINGS

FIG. 1 is a view schematically showing a first situation where a method according to the present invention is performed;
FIG. 2 is a view schematically showing a second situation where the method according to the present invention is performed; and
FIG. 3 is a view schematically showing a third situation where the method according to the present invention is performed.

### EXEMPLARY EMBODIMENTS

The following description involves carrying out the present invention in a network based on a WCDMA technique. More correctly, the invention will be described in a UMTS network.

Discussing anew the UMTS, a radio interface includes three primary layers of
- physical layer (layer 1),
- data connection layer (layer 2), and
- control layer (RRC) for radio resource.
The layer 2 comprises four sublayers of
- MAC (Medium Access Control) sublayer,
- RLC (Radio Link) sublayer,
- PDPC (Packet Data Convergence Protocol) sublayer, and
- BMC (Broadcast/Multicast Protocol) sublayer.

A new HARQ protocol layer for controlling the report of receipt notification between the base station and the terminal is provided on the MAC sublayer.

In the UMTS, the network transmits the first and second synchronization codes via a first channel PSCH (Primary Synchronization Channel) and a second channel SSCH (Secondary Synchronization Channel) to the terminal within the current cell at any time to identify an adjacent UMTS cell and estimate a pulse response on the transmission channel via a beacon channel called a CPICH (Common Pilot Channel). The CPICH channel comprises a predetermined bit/symbol sequence, called a pilot sequence, transmitted to the cell at any time. The transmission amount of bit/symbol is fixed, viz., 30 kbps (kilo bits/sec), or 15 kbps (kilo symbols/sec). The CPICH channel is not connected to any transmission channel. The terminal can decode the CPICH channel and evaluate the quality of down-link, while waiting for a NACK receipt notification of the cell in the network during synchronous communication. Therefore, the terminal comprises a measurement module for estimating the quality of connection with the base station via the CPICH channel and a module for determining to perform the retransmission of data to the base station depending on the estimated quality. Discussing anew the synchronous connection, a transmission block is necessarily exchanged between the network and the terminal during the TTI (Transmission Time Interval) time.

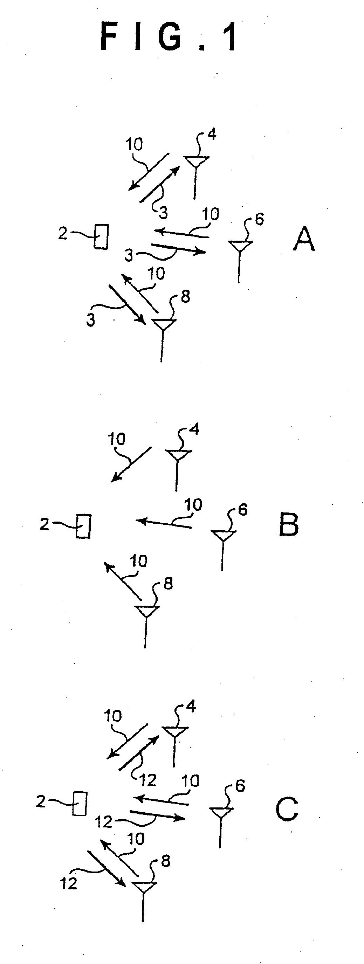

FIG. 1 schematically shows a mobile terminal 2 that communicates synchronously with three base stations 4, 6 and 8 in a network, in which all the base stations have properly received data transmitted from the terminal 2.

Referring to FIG. 1A, the terminal 2 sends a data packet to the base stations 4, 6 and 8 (arrow 3), and on a parallel with this, receives a bit/symbol pilot sequence via the CPICH channel from each of the base stations (arrow 10).

In FIG. 1B, the terminal 2 determines the power of a signal received from each of the base stations 4, 6 and 8 by analyzing the bit/symbol transmitted via the CPICH channel during the waiting period of a receipt notification signal, and compares the measured power with a predetermined threshold power. If the measured power for each of the base stations is greater than the threshold, the determination module presumes that each of the base stations 4, 6 and 8 has properly received the packet sent from the terminal 2 (FIG. 1C, arrow 12), to send the next packet without waiting for an ACK signal. In this system, the terminal infers an ACK signal implicitly included from the measured value performed on the CPICH channel. Therefore, each of the base stations 4, 6 and 8 does not need to explicitly send the ACK signal to the terminal during synchronous connection. Thereby, the power can be saved on the down-link and allocated to another function.

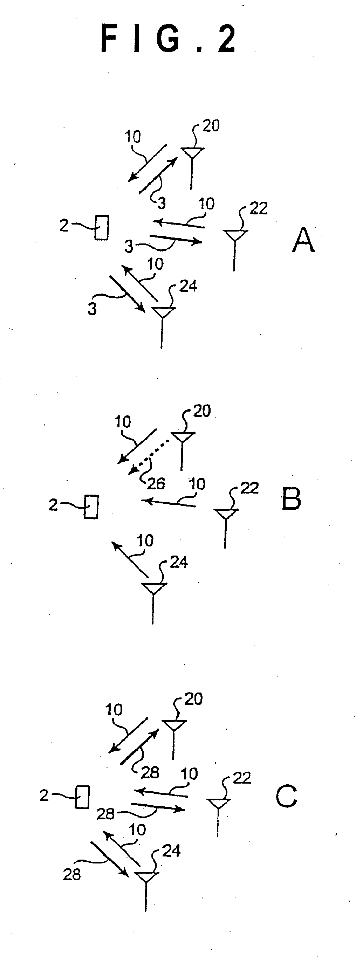

FIG. 2 schematically shows a second situation where some base stations have not properly received data transmitted from the terminal.

Referring to FIG. 2A, the terminal 2 sends a data packet to each of the base stations 20, 22 and 24 (arrow 3), and on a parallel with this, receives a bit/symbol pilot sequence via the CPICH channel from each of the base stations (arrow 10). In this case, the base station 20 sends a NACK signal to the terminal 2 (FIG. 2B, arrow 26). The terminal 2 determines the power of a signal received from each of the base stations 20, 22 and 24 by analyzing the bit/symbol transmitted via the CPICH channel during the waiting period of a receipt notification signal, and compares the measured power with a predetermined threshold power. If the measured power for each base station is greater than the threshold, the determination module presumes that at least the base station 24, 26 have properly received the packet sent from the terminal 2 (FIG. 2C), to send the next packet in accordance with the arrow 28 without waiting for the ACK signal. No consideration is given to the NACK signal (arrow 26) sent from the base station 20. The base stations 20, 22 and 24 continue to send the bit/symbol to the terminal 2 via the CPICH channel (arrow 10).

In this case, the method according to the invention makes it possible to consider the fading under the physical transmission conditions of the signal sent from the base station 20, and avoid retransmitting the packet if the base stations 22 and 24 have properly received the sent packet.

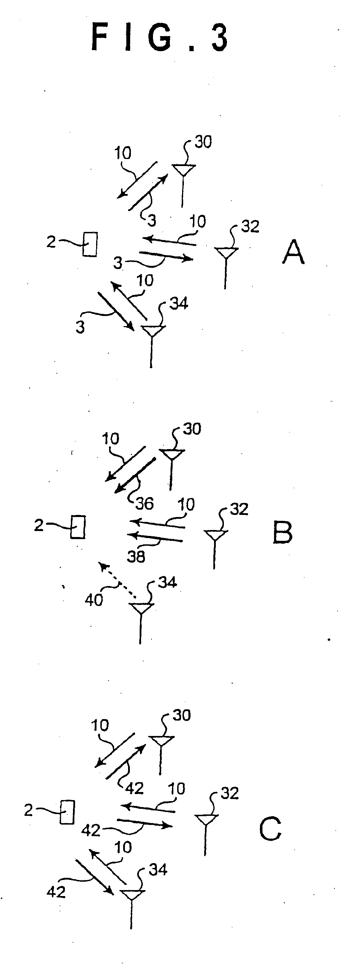

FIG. 3 schematically shows a third situation where none of the base stations have properly received data transmitted from the terminal.

Referring to FIG. 3A, the terminal 2 sends a data packet to the base stations 30, 32 and 34 (arrow 3), and on a parallel with this, receives a bit/symbol pilot sequence via the CPICH channel from each of the base stations (arrow 10). In this case, two base stations 30 and 32 send a NACK signal to the terminal 2 (FIG. 3B, arrows 36 and 38). The terminal 2 determines the power of a signal received from each of the base stations 30, 32 and 34 by analyzing the bit/symbol transmitted via the CPICH channel during the waiting period of a receipt notification signal, and compares the measured power with a predetermined threshold power. In this case, if the measured power (arrow 40) of the signal received from the base-station 34 is smaller than the threshold, the determination module presumes that none of the base stations 30, 32 and 34 have properly received the packet sent from the terminal 2. The terminal retransmits the same packet to the base station 34 (FIG. 3C, arrow 42), and makes the measurements again for the signals (arrow 10) transmitted from the base stations via the CPICH channel. This operation is repeated until at least one of the base stations 30, 32 and 34 properly receives the packet sent from the terminal 2.

## Claims

1. A method for optimizing receipt notification information interchange in the synchronous communication between a terminal (2) and a network to optimize interchange of a receipt notification signal between a plurality of base stations (4, 6, 8) and a mobile terminal (2) synchronously connected in a cellular communication network, said method comprising:
transmitting, in response to data transmissions, only negative acknowledge NACK receipt notifications but no positive acknowledge ACK receipt notifications by said base stations (4, 6, 8) to said terminal (2);
estimating quality of down-link between each base station (4, 6, 8) and the terminal (2) on at least one standardized transmission channel (10);
inferring a positive acknowledge ACK receipt notification implicitly included from said estimated quality of down-link; and
retransmitting data to the base station (4, 6, 8) depending on said estimated quality of link.

2. The method for optimizing receipt notification information interchange in the synchronous communication between the terminal (2) and the network according to claim 1, wherein said terminal (2) retransmits data if the estimated quality of all the connections is below a predetermined value.

3. The method for optimizing receipt notification information interchange in the synchronous communication between the terminal (2) and the network according to claim 1, wherein said terminal (2) retransmits data only if the estimated quality of at least one connection is below the predetermined value and all other base stations (4, 6, 8,) send said negative acknowledge NACK receipt notification to the terminal (2).

4. The method for optimizing receipt notification information interchange in the synchronous communication between the terminal (2) and the network according to any one of claims 1 to 3, wherein said network is based on a WCDMA technique.

5. The method for optimizing receipt notification information interchange in the synchronous communication between the terminal (2) and the network according to claim 4, wherein said network is the UMTS network.

6. The method for optimizing receipt notification information interchange in the synchronous communication between the terminal (2) and the network according to any one of claims 1 to 4, wherein said standardized transmission channel (10) is a CPICH channel.

7. A mobile terminal (2) for communicating with a plurality of base stations (4, 6, 8) in a cellular communication network, comprising:
means for receiving only negative acknowledge NACK receipt notifications but no positive acknowledge ACK receipt notifications, transmitted from said base stations (4, 6, 8) in response to data transmissions;
means for estimating the quality of down-link for each base station (4, 6, 8) on at least one standardized transmission channel (10);
means for inferring a positive acknowledge ACK receipt notification implicitly included from said estimated quality of down-link; and
means for determining to repeat the retransmission of data to the base station (4, 6, 8) depending on said estimated quality.

8. The mobile terminal (2) according to claim 7, further comprising comparison means for comparing the estimated quality with a predetermined value.

## Patentansprüche

1. Ein Verfahren zum Optimieren des Empfangsnotifikations-Informationsaustauschs bei der synchronen Kommunikation zwischen einem Terminal (2) und einem Netzwerk, um den Austausch eines Empfangsnotifikationssignals zwischen einer Mehrzahl von Basisstationen (3, 6, 8) und einem mobilen Terminal (2), die synchron in einem zellulären Kommunikationsnetzwerk verbunden sind, zu optimieren, wobei das Verfahren aufweist:
Übertragen, in Reaktion auf Datenübertragungen, von nur negativen Empfangsnotifikationen NACK aber nicht von positiven Empfangsnotifikationen ACK durch die Basisstationen (4, 6, 8) an das Terminal (2);
Schätzen der Qualität des Downlinks zwischen jeder Basisstation (4, 6, 8) und dem Terminal (2) bei zumindest einem standardisierten Übertragungskanal (10);
Folgern einer positiven Empfangsnotifikation ACK implizit enthalten aus der geschätzten Qualität des Downlinks; und
erneutes Übertragen von Daten an die Basisstation (4, 6, 8) abhängig von der geschätzten Qualität des Links.

2. Das Verfahren zum Optimieren des Empfangsbestätigungs-Informationsaustauschs in der synchronen Kommunikation zwischen dem Terminal (2) und dem Netzwerk nach Anspruch 1, wobei das Terminal (2) erneut Daten überträgt, wenn die geschätzte Qualität aller der Verbindungen unterhalb eines vorbestimmten Werts ist.

3. Das Verfahren zum Optimieren des Empfangsbestätigungs-Informationsaustauschs in der synchronen Kommunikation zwischen dem Terminal (2) und dem Netzwerk nach Anspruch 1, wobei das Terminal (2) Daten nur dann erneut überträgt, wenn die geschätzte Qualität von zumindest einer Verbindung unterhalb des vorbestimmten Werts ist und alle anderen Basisstationen (4, 6, 8) negative Empfangsnotifikationen NACK an das Terminal (2) senden.

4. Das Verfahren zum Optimieren des Empfangsnotifikations-Informationsaustauschs in der synchronen Kommunikation zwischen dem Terminal (2) und dem Netzwerk nach einem der Ansprüche 1 bis 3, wobei das Netzwerk basiert auf WCDMA-Technik.

5. Das Verfahren zum Optimieren des Empfangsnotifikations-Informationsaustauschs in der synchronen Kommunikation zwischen dem Terminal (2) und dem Netzwerk nach Anspruch 4, wobei das Netzwerk das UMTS-Netzwerk ist.

6. Das Verfahren zum Optimieren des Empfangsnotifikations-Informationsaustauschs in der synchronen Kommunikation zwischen dem Terminal (2) und dem Netzwerk nach einem der Ansprüche 1 bis 4, wobei der standardisierte Übertragungskanal (10) ein CPICH-Kanal ist.

7. Ein mobiles Terminal (2) zum Kommunizieren mit einer Mehrzahl von Basisstationen (4, 6, 8) in einem zellulären Kommunikationsnetzwerk, aufweisend:
Mittel zum Empfangen von nur negativen Empfangsnotifikationen NACK aber nicht von positiven Empfangsnotifikationen ACK, die von den Basisstationen (4, 6, 8) in Reaktion auf Datenübertragungen übertragen werden;
Mittel zum Abschätzen der Qualität des Downlinks für jede Basisstation (4, 6, 8) bei zumindest einem standardisierten Übertragungskanal (10);
Mittel zum Folgern einer positiven Empfangsnotifikation ACK implizit enthalten aus der geschätzten Qualität des Downlinks; und
Mittel zum Ermitteln, dass die Übertragung von Daten an die Basisstation (4, 6, 8) wiederholt werden soll basierend auf der abgeschätzten Qualität.

8. Das mobile Terminal (2) nach Anspruch 7, ferner aufweisend Vergleichsmittel zum Vergleichen der abgeschätzten Qualität mit einem vorbestimmten Wert.

## Revendications

1. Procédé pour optimiser l'échange d'informations de notification de réception dans la communication synchrone entre un terminal (2) et un réseau afin d'optimiser l'échange d'un signal de notification de réception entre une pluralité de stations de base (4, 6, 8) et un terminal mobile (2) connectés de manière synchrone dans un réseau de communication cellulaire, ledit procédé comprenant :
la transmission, en réponse à des transmissions de données, uniquement de notifications de réception d'accusé de réception négatif NACK mais pas de notifications de réception d'accusé de réception positif ACK par lesdites stations de base (4, 6, 8) audit terminal (2) ;
l'estimation d'une qualité de liaison descendante entre chaque station de base (4, 6, 8) et le terminal (2) sur au moins un canal de transmission normalisé (10) ;
l'inférence d'une notification de réception d'accusé de réception positif ACK incluse implicitement à partir de ladite qualité de liaison descendante estimée ; et
la retransmission de données à la station de base (4, 6, 8) en fonction de ladite qualité de liaison estimée.

2. Procédé pour optimiser l'échange d'informations de notification de réception dans la communication synchrone entre le terminal (2) et le réseau selon la revendication 1, dans lequel ledit terminal (2) retransmet des données si la qualité estimée de toutes les connexions est au-dessous d'une valeur prédéterminée.

3. Procédé pour optimiser l'échange d'informations de notification de réception dans la communication synchrone entre le terminal (2) et le réseau selon la revendication 1, dans lequel ledit terminal (2) retransmet des données uniquement si la qualité estimée d'au moins une connexion est au-dessous de la valeur prédéterminée et toutes les autres stations de base (4, 6, 8) envoient ladite notification de réception d'accusé de réception négatif NACK au terminal (2).

4. Procédé pour optimiser l'échange d'informations de notification de réception dans la communication synchrone entre le terminal (2) et le réseau selon l'une quelconque des revendications 1 à 3, dans lequel ledit réseau est basé sur une technique WCDMA (Accès multiple par répartition en code à large bande).

5. Procédé pour optimiser l'échange d'informations de notification de réception dans la communication synchrone entre le terminal (2) et le réseau selon la revendication 4, dans lequel ledit réseau est le réseau UMTS (Système universel de télécommunications avec les mobiles).

6. Procédé pour optimiser l'échange d'informations de notification de réception dans la communication synchrone entre le terminal (2) et le réseau selon l'une quelconque des revendications 1 à 4, dans lequel ledit canal de transmission normalisé (10) est un canal CPICH.

7. Terminal mobile (2) pour communiquer avec une pluralité de stations de base (4, 6, 8) dans un réseau de communication cellulaire, comprenant :
des moyens pour recevoir uniquement des notifications de réception d'accusé de réception négatif NACK mais pas de notifications de réception d'accusé de réception positif ACK, transmises depuis lesdites stations de base (4, 6, 8) en réponse à des transmissions de données ;
des moyens pour estimer la qualité de liaison descendante pour chaque station de base (4, 6, 8) sur au moins un canal de transmission normalisé (10) ;
des moyens pour inférer une notification de réception d'accusé de réception positif ACK incluse implicitement à partir de ladite qualité de liaison descendante estimée ; et
des moyens pour déterminer de répéter la retransmission de données à la station de base (4, 6, 8) en fonction de ladite qualité estimée.

8. Terminal mobile (2) selon la revendication 7, comprenant en outre des moyens de comparaison pour comparer la qualité estimée avec une valeur prédéterminée.
